# EUROPEAN PATENT APPLICATION

(11) **EP 2 436 430 A1**
(43) Date of publication of application: **04.04.2012**
(21) Application number: 10183784.7
(22) Date of filing: 30.09.2010
(51) Int. Cl.: B01D 21/00

(54) **Apparatus and method for removing particles from water**

(71) Applicant: GEA 2H Water Technologies GmbH, 48493 Wettringen (DE)
(72) Inventor: The designation of the inventor has not yet been filed
(74) Representative: Heine, Christian Klaus

(57) **Abstract**

The present invention is directed to an apparatus (1) for removing particles (2) from water, in particular from storm water run off comprising, a box (3) with an upper side (4) and a lower side (5), at least one inlet (6), at least one outlet (7), at least one filter element (8) and at least one floating element (9) for allowing the box to float in a body of water (16). Said filter element (8) forms a fluid communication means between the at least one inlet (6) and the at least one outlet (7). Preferably, the at least one outlet (7) is formed at least partly by a perforated pipe (11).

The present invention allows to easily transport a filter apparatus (1) to a location where it is temporarily needed. As the filter apparatus (1) floats within the water it is adaptable to many different requirements, such as quickly falling and raising water levels at many different locations. The apparatus (1) can also be used in metallurgical mines to remove the valuable metals from used process water, which has build bodies of water.

## Description

The present invention relates to an apparatus and a method for removing particles from water, in particular from storm water run off. The apparatus according to the invention contains a box with at least one filter element.

In many parts of the world rainfall is sporadic but intense and often coincides with thunderstorms or flash floods. Large quantities of water fall in a very short time and flow e. g. into gullies, where temporary bodies of water are formed. In order to use the water for agricultural and industrial purposes, it is tried to collect and store the water in water reservoirs. Often the storm water run off is regularly heavily contaminated with suspended solid matter generating problems for conducting and storing this water. The suspended solid matter may clog the water transportation means and precipitate in the water reservoirs.

As the rainfall is distributed randomly, both regarding its location and intensity the bodies of water are formed frequently at different locations and in different quantities. Maintaining water collection devices at many or every possible body of water, which work reliably with different water levels requires a great deal of effort and is expensive.

Furthermore, as the water collected in the bodies of water evaporates quickly, in particular in warm climate, it should be collected quickly after the bodies of water have been formed and the device for collecting the water should be adaptable to the quickly rising and falling water level.

Bodies of water are formed in metallurgic mines as well, where process water used for mining forms bodies of water at unforeseeable locations. Therefore, equipment is needed, which is easy to handle and can remove the valuable metal ores from the water or clean spent process water prior to it being returned to the natural water courses.

It is an object of the present invention to at least partially solve the problems discussed with regard to the prior art. In particular, it is sought to provide an apparatus and a method for removing particles from water, which apparatus is easy to transport and which can easily be adapted to different bodies of water, in particular with quickly falling and raising water levels.

Said objects are achieved by means of an apparatus and a method according to the features of the independent claims. The dependent claims specify further advantageous embodiments of the invention. It should be noted that the features specified individually in the patent claims may be combined with one another in any desired technologically reasonable way and form further embodiments of the invention. The specification, in particular in connection with the figures, explains the invention further and specifies particularly preferred design variants of the invention.

In particular, the objects are achieved by an apparatus for removing particles from water, in particular from storm water run off, comprising a box with an upper and a lower side, at least one inlet, at least one outlet, at least one filter element, said at least one filter element forming a fluid communication means between the at least one inlet and the at least one outlet and at least one floating element for allowing the box to float in a body of water.

For operation the apparatus according to the invention is placed in a body of water, in particular in a body of water formed by storm water run off. The water, usually containing suspended particles, enters the box through the at least one inlet and is conducted through the at least one filter element in such a way that the particles are removed from the water. The filtered water is further advanced through the at least one outlet to a water reservoir for clean water to further use in industrial and agricultural purposes. As the apparatus according to the present invention is floating in the water, it adapts to quickly changing water levels. In order to keep the removing process going it is preferred to drive the water by a suction force applied to the at least one outlet.

The box represents the main frame of the apparatus, to which all other elements are at least indirectly attached. The base area of the box can be of arbitrary shape, such as rectangular, circular or oval. The side surfaces of the box are not penetrable for water at least in a common height section, so that inlet water can enter into the box only from above or preferable from below the not penetrable common height section into the box.

The part of the apparatus, through which water enters into the box during operation, is considered the at least one inlet. Therefore, the at least one inlet can be formed by a porous and permeable section of the box, but is preferable formed by an opening in one of the walls of the box. The part of the apparatus, through which the water leaves the box during operation, is considered the at least one outlet, which can be formed by an adequate opening in the upper part of the box.

The at least one filter element is preferably arranged in the box in such a way that the water conducted through the apparatus has to pass the at least one filter element at least once. The at least one filter element is particularly preferred arranged in the common height section within the box. The at least one filter element can be formed by a surface or a volume filter, but is preferable formed by a self cleaning filter. In particular, the at least one filter element is designed to remove particles, with a diameter of at least 10 µm [Micrometer], preferable at least 30 µm, most preferable at least 100 µm. In one embodiment the apparatus does regularly not filter particles with a diameter greater than 1 cm [Centimetre], preferable greater than 5 cm.

The at least one floating element is the element of the apparatus, which allows the apparatus to float when placed in a body of water and therefore compensates the mass of the other elements of the apparatus. Therefore, the effective density of the at least one floating element is chosen in such a way that the apparatus floats in water, wherein it is preferable that the effective density can be adjusted during use in order to adjust the immersion depth of the apparatus in regard to the water surface of the body of water. The effective density of the floating element is preferably adjusted in such a way that the outlet is below the water surface of the water within the box. In this embodiment the floating element is rigidly connected to the box. Alternatively, the floating element has a given density and the depth of immersion of the box can be altered by the lengths of a connection member between the floating element and the box.

The apparatus according to the invention can alternatively be used in the metallurgic mining industry, where it can remove valuable metal ores from randomly formed bodies of process water or clean spent process water prior to it being returned to the natural water courses.

In a preferred embodiment of the invention the apparatus is dimensioned in such a way that it can be transported by a truck. The length of the apparatus is between 1 m [meter] and 10 m, in particular between 2,5 m and 5 m, the width of the apparatus is between 1 m and 4 m, in particular between 1,5 m and 3 m, and the height of the apparatus is between 0,8 m and 4 m, in particular between 1,2 m and 2,4 m. An apparatus, which is transportable by a truck, can easily be transported to different bodies of water, in particular in regions, where heavy rainfalls varies locally often. In another preferred embodiment of the apparatus the at least one inlet is arranged between the at least one filter element and the lower side and the at least one outlet is arranged between the at least one filter element and the upper side. According to this embodiment of the invention the water flows in the direction from the lower side to the upper side of the box and has to pass the at least one filter element. Therefore, when the apparatus floats in the body of water and water is drawn off from the box through the at least one outlet, the pressure of the water in the body of water drives further water through the at least one inlet into the box.

According to another preferred embodiment of the invention the at least one inlet is formed by at least one opening in the lower side of the box, wherein a complete opening of the lower side of the box is especially preferred. This way it is ensured that an equally distributed flow of water from the lower side of the box to the upper side of the box through the at least one filter element is achieved.

Furthermore, it is preferred that the at least one outlet is formed at least partly by a perforated pipe, in particular by a slotted pipe. The perforated pipe extends preferably over the whole width or length of the box. The perforations in the pipe are formed by recesses in the pipe giving a permeable area between 0,1 % and 5,0 % of the surface area of the pipe, in particular between 0,5 % and 3,4 %. The perforated pipe allows withdrawing filtered water from the box over the entire length and/or width of the box, whereby an equal flow distribution of the water through the box is achieved.

It is also preferred that the at least one floating element is formed by an airtight tank, in particular by an airtight sponson, wherein the effective density of the tank can be varied by adjusting the amount of air in the airtight tank. The airtight tank is an affordable means, with which an adjustable floating element can be realised.

As the floating apparatus can alter its position with regard to the ground of the body of water it is preferred that a flexible pipe is connected to the outlet. In another preferred embodiment a siphon is connected to the outlet.

According to another advantageous embodiment of the invention the at least one filter element is formed by plastic profiles combined to tubes, which are also known as lamella-clarifiers. For example, the lamella clarifiers used for an embodiment of the invention are distributed under the trademark "TUBEdek™" by GEA 2H Water Technologies GmbH. The plastic profiles are installed in honeycomb like separator packages, wherein water with suspended particles enters into the tubes; the particles adhere to the surface of the tubes and agglomerate with other particles to bigger particles. If the agglomerated particles achieve a certain size or e. g. mass they can roll down the tubes against the flow of water and eventually pass through the inlet of the box into the body of water. Thereby, a self cleaning filter element is provided.

In order to enhance the rolling down of agglomerated particles the lamella clarifiers are inclined to the lower side of the box with an angle between 30° and 80°, in particular between 45° and 65. The angle is measured between a central axis of a combined tube and the plane of the lower side of the box.

According to another aspect of the invention a method for removing particles from water is suggested. The method comprises the steps of
a) placing a floatable filter apparatus in a body of water,
b) conducting water from the body of water through an inlet of the filter apparatus into the filter apparatus,
c) conducting the water through a filter element of the filter apparatus for removing the particles and
d) conducting the filtered water further to a water reservoir.

The floatable filter apparatus is preferably an apparatus according to the present invention.

According to the present invention the apparatus can be brought to a body of water, which is formed e. g. after a thunder storm. Alternatively, the apparatus can be placed in a gully in dry times and when the water from the thunder storm flows into the gully, the filter apparatus floats in the resulting body of water. As the lower part of the filter apparatus will be below the water surface, water will enter into the filter apparatus through the inlets and will be forced through the filter element, in which the particles are removed from the water. Subsequently, the filtered water is removed from the filter apparatus and can be stored in a water reservoir for further use in agricultural and/or industrial applications.

It is advantageous if the depth of immersion of the floatable filter apparatus with respect to the water surface of the body of water is adjusted by adjusting the amount of air in an airtight tank of the filter apparatus. Thereby an easy way of adjusting the depth of immersion of the floating filter apparatus with respect to the water surface is achieved.

It is preferred when the filtered particles agglomerate, when the water is guided through the filter element, wherein greater particles are formed, which can sink against the flow of water to the lower side of the filter apparatus and finally through an opening in the lower side of the filter apparatus to the ground of the body of water.

It is also preferable, when the filter element is adjusted such that agglomerated particles are guided to the body of water, if at least one of the following values of the agglomerated particles is above a predeterminable critical value:
- the mass;
- the diameter;
- the volume; and
- the surface area.

This means in particular, that the agglomerated particles begin to sink against the flow of water, if at least one of the critical values is reached.

In a preferred embodiment of the invention the filtered water is conducted to an underground tank, which forms the water reservoir. The underground tank is preferably a so called "GEOdek™" rain water harvesting block, distributed by GEA 2H Water Technologies GmbH. It is suggested that the underground tanks are distributed at several locations, where heavy rainfall can be expected and where water would be collected in a gully nearby. The floating filter apparatus is brought to the gully only when it is filled with water. Therefore, not every underground tank needs to be permanently connected to the filter apparatus.

According to another embodiment of the invention the conduction of the water is driven by a pump and/or a siphon tube which are arranged behind the outlet of the floatable filter apparatus. It is preferred that the filtered water is removed from the box of the apparatus so that more water can be conducted through the floatable filter apparatus.

Furthermore, it is preferred that up to 6 m³/h.m² [cubic meter per hour per square metre] of water are conducted through the filter apparatus, wherein it especially preferred that between 3 m³/h.m² and 5 m³/h.m² of water are conducted through the filter apparatus. In this context these values regard to the penetratable area of the filter element, in particular to the cross section of the lamella clarifiers projected to the plane of the lower side. The amount of water conducted through the filter apparatus can be adjusted by the pump power of the pump. In particular, the amount of water conducted through the apparatus is adjusted such that agglomerated particles may sink against the flow of water.

Advantages of the apparatus according to the present invention are applicable to the method according to the present invention and vice versa. Particularly preferred design variants of the invention and also the technical field will now be explained in more detail on the basis of the figures. It should be noted that the exemplary embodiments shown in the figures are not intended to restrict the invention and are schematically shown in:
- Fig. 1:: an embodiment of the apparatus according to the invention,
- Fig. 2:: a second embodiment of the apparatus according to the present invention in front view,
- Fig. 3:: the second embodiment in top view,
- Fig. 4:: the second embodiment in side view,
- Fig. 5:: an apparatus according to the invention in use.

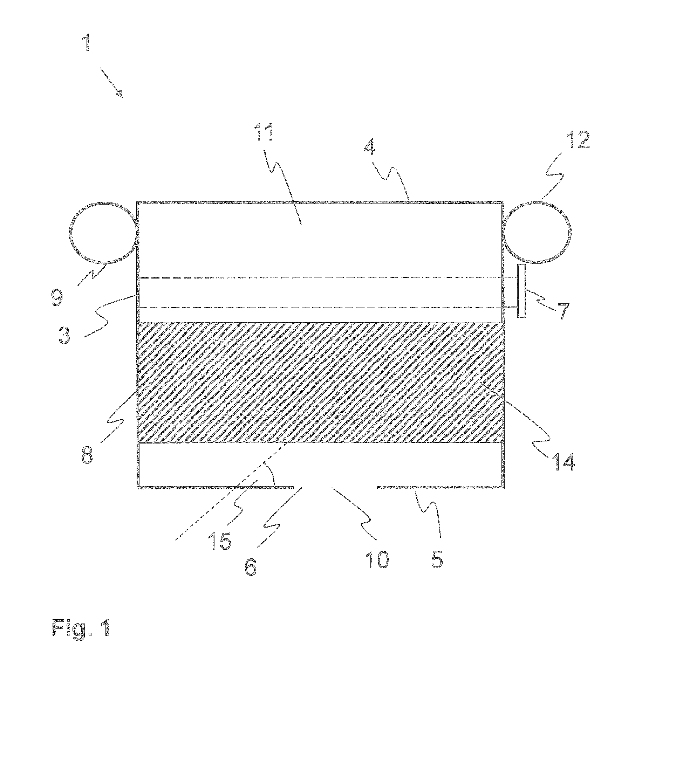

Fig. 1 schematically shows an embodiment of an apparatus 1 for removing particles 2 from water according to the present invention. The apparatus 1 comprises a box 3 with an upper side 4 and a lower side 5. Floating elements 9, which are embodied as sponsons 12, are arranged at the outside of the box 3. Filter elements 8, embodied as lamella clarifiers 14, are arranged in the inside of the box 3. The lamella clarifiers 14 are inclined with respect to the lower side 5 of the box 3 with an angle 15. In the lower side 5 of the box 3 an inlet 6 is arranged, which is formed as an opening 10. Preferably, the whole lower side 5 of the box 3 is open. In the upper part of the box 3 an outlet 7 is arranged, which is connected to a perforated pipe 11, which extends over the inner side of the box 3.

The floating elements 9 have an effective density that is low enough to compensate the mass of the other components of apparatus 1, so that the apparatus 1 floats in water. For operation the apparatus 1 is placed in a body of water 16. Water enters into the box 3 through opening 10 and passes through the filter elements 8 up to the perforated pipe 11. In order to keep the filtering process going water has to be withdrawn from the inside of the box 3 through outlet 7. When the water passes through the lamella clarifiers 14 the particles adhere to the surface of the lamella clarifiers 14 and agglomerate to larger particles which can sink to the bottom of the box 3 and eventually through opening 10 to the ground of the body of water 16. The depth of immersion 26 of the apparatus 1 with respect to a water surface 18 and therefore the water level within the box 3 can be adjusted by altering the effective density of the floating elements 9. The water level within the box should be above the opening 7, so that the filtered water can easily be extracted from the box 3 by applying a low pressure to the outlet 7 with appropriate means, for example by a pump 21, which is connected to the outlet 7 by a flexible pipe 13 or by siphoning in the cases where the water reservoir 17 is positioned below the water surface 18 of the body of water 16.

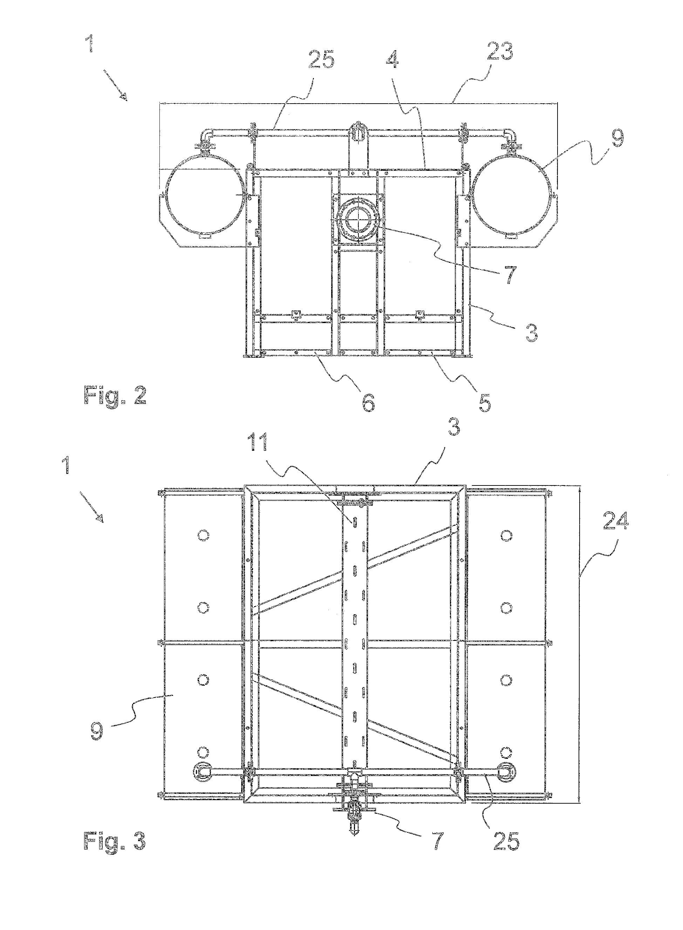

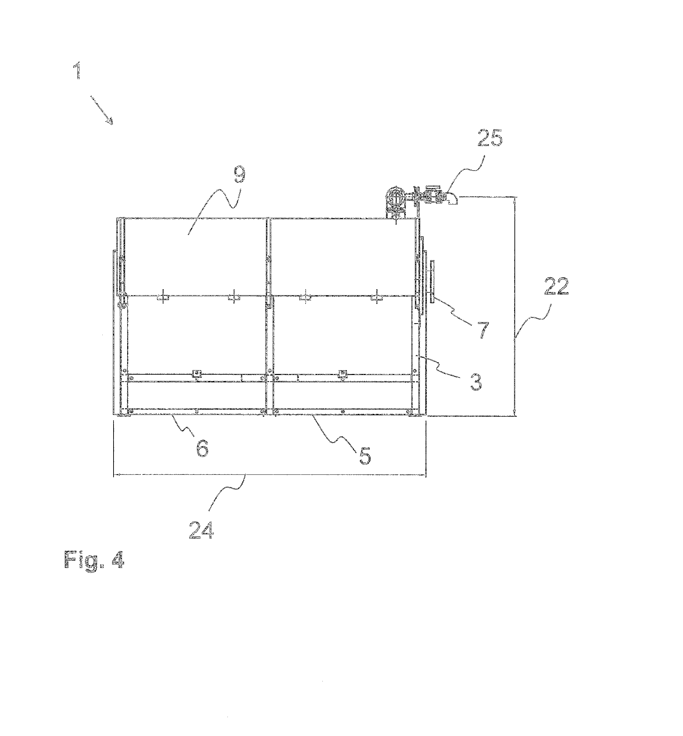

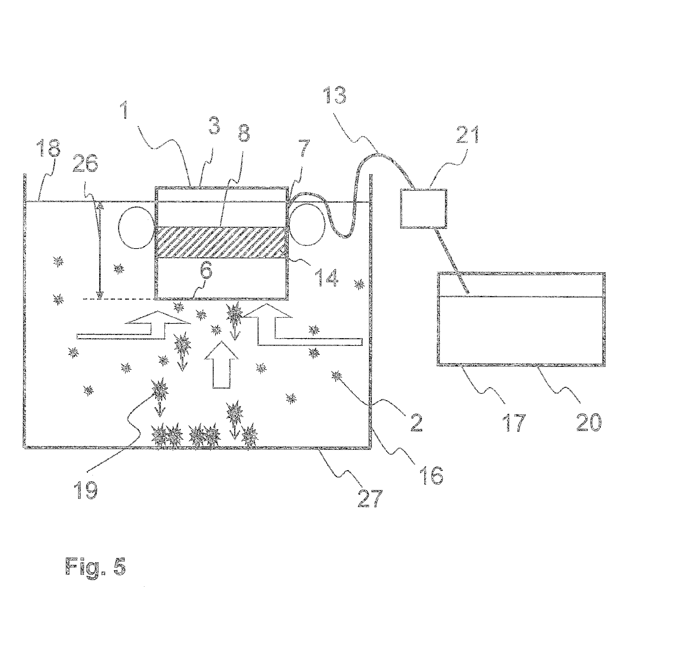

Fig. 2, 3 and 4 show a second embodiment of an apparatus 1 according to the present invention, wherein fig. 2 shows a front view, fig. 3 shows a top view and fig. 4 shows a side view of the apparatus 1. The apparatus 1 comprises a box 3 with an upper side 4 and a lower side 5, to which floating elements 9 are connected. The lower side 5 is completely open, so that the lower side 5 forms an inlet 6. In the upper part of box 3 an outlet 7 is formed, which extends into the box 3 as a perforated pipe 11. A ballast supply system 25 is shown, with which the floating elements 9 can be supplied with water or air. This way the depth of immersion 26 of the apparatus 1 with respect to the water surface 18 of the body of water 16 can be adjusted. The apparatus 1 has a height 22, a width 23 and length 24 which should be in a dimension, so that the apparatus 1 can be transported by a truck. The function of apparatus 1 will now be described more closely with respect to fig. 5.

Fig. 5 shows an apparatus 1 according to the present invention arranged in a body of water 16. The apparatus 1 floats within the body of water 16 with respect to a water surface 18, wherein a depth of immersion 26 of the apparatus 1 can be adjusted with respect to the water surface 18 by adjusting the effective density of floating elements 9. The apparatus 1 is connected to a flexible pipe 13, which is connected to a pump 21 and/or siphon tube 28. The flexible pipe 13 leads to a water reservoir 17, which may be embodied as an underground tank 20. When in use water with suspended particles 2 enters into box 3 of apparatus 1 through inlet 6. The water passes through filter elements 8 in which the particles 2 adhere to the lamella clarifiers 14 and in which the particles 2 agglomerate to each other. If the agglomerated particles 19 have reached a certain size they descend down from the filter element 8 and may sink to the ground 27 of the body of water 16. The filtered water is pumped off by pump 21 through opening 7 and is conducted to the water reservoir 17, where it is stored for further use. In use the water is permanently driven by the pump 21 so that a constant flow of water through opening 6 into box 3 and through filter element 8 is formed.

The present invention allows to easily transport a filter apparatus 1 to a location where it is temporarily needed. As the filter apparatus 1 floats within the water it is adaptable to many different requirements, such as quickly falling and raising water levels at many different locations. The apparatus 1 can also be used in metallurgical mines to remove the valuable metal ores and solid contaminants from used process water, which has build bodies of water.

### Reference list

- 1: apparatus
- 2: particles
- 3: box
- 4: upper side
- 5: lower side
- 6: inlet
- 7: outlet
- 8: filter element
- 9: floating element
- 10: opening
- 11: perforated pipe
- 12: tank
- 13: flexible pipe
- 14: lamella clarifiers
- 15: angle
- 16: body of water
- 17: water reservoir
- 18: water surface
- 19: agglomerated particles
- 20: underground tank
- 21: pump
- 22: height
- 23: width
- 24: length
- 25: ballast supply system
- 26: depth of immersion
- 2 7: ground
- 28: siphon tube

## Claims

1. Apparatus (1) for removing particles (2) from water comprising a box (3) with an upper side (4) and a lower side (5), at least one inlet (6), at least one outlet (7), at least one filter element (8), said at least one filter element (8) forming a fluid communication means between the at least one inlet (6) and the at least one outlet (7) and at least one floating element (9) for allowing the box to float in a body of water (16).

2. Apparatus (1) according to claim 1, wherein the at least one inlet (6) is arranged in between the at least one filter element (8) and the lower side (5) and the at least one outlet (7) is arranged in between the at least one filter element (8) and the upper side (5).

3. Apparatus (1) according to one of the preceding claims, wherein the at least one inlet (6) is formed by at least one opening (10) formed in the lower side (5) of the box (3).

4. Apparatus (1) according to one of the preceding claims, wherein the at least one outlet (7) is formed at least partly by a perforated pipe (11).

5. Apparatus (1) according to one of the preceding claims, wherein the at least one floating element (9) is formed by an air tight tank (12).

6. Apparatus (1) according to one of the preceding claims, wherein a flexible pipe (13) is connected to the outlet (7).

7. Apparatus (1) according to one of the preceding claims, wherein the at least one filter element (8) is formed by plastic profile combined to tubes (14).

8. Apparatus (1) according to claim 7, wherein the lamella-clarifiers (14) are inclined to the lower side (5) of the box (3) with an angle (15) between 30° and 80°.

9. Method for removing particles (2) from water by
a) placing a floatable filter apparatus (1) in a body of water (16),
b) conducting water from the first water reservoir (16) through an inlet (6) of the filter apparatus (1) into the filter apparatus (1),
c) conducting the water through a filter element (8) of the filter apparatus (6) for removing the particles (2) and
d) conducting the filtered water further to a water reservoir (17).

10. Method according to claim 9, wherein the depth of immersion (26) of the floatable filter apparatus (1) with respect to the water surface (18) of the body of water (16) is adjusted by adjusting the amount of air in an air tight tank (12) of the filter apparatus (1).

11. Method according to claim 9 or 10, wherein the filtered particles (2) agglomerate, when the water is conducted through the filter element.

12. Method according to claim 11, wherein the filter element is adjusted such that agglomerated particles are guided to the body of water if at least one of the following values of the agglomerated particles is above a predeterminable value:
- the mass,
- the diameter,
- the volume and
- the surface area.

13. Method according to one of claims 9 to 12, wherein the filtered water is conducted to an underground tank (20), which forms the water reservoir (17).

14. Method according to one of claims 9 to 13, wherein the conduction of the water is driven by a pump (21) and/or siphon tube (28)..

15. Method according to one of claims 9 to 14, wherein up to 6 m³/h.m² of water are conducted through the filter apparatus.
